# EUROPEAN PATENT APPLICATION

(11) **EP 1 335 310 A1**
(43) Date of publication of application: **13.08.2003**
(21) Application number: 01974876.3
(22) Date of filing: 16.10.2001
(51) Int. Cl.: G06F 17/60, G07B 1/00

(54) **ELECTRONIC TICKET ISSUING SYSTEM**

(30) Priority: 19.10.2000 JP 2000318968
(71) Applicant: Skinner, James Jay, Chuo-ku, Tokyo 104-0052 (JP)
(72) Inventor: Skinner, James Jay, Chuo-ku, Tokyo 104-0052 (JP)
(74) Representative: Kirschner, Klaus Dieter, Dipl.-Phys.
(86) International application number: JP0109070
(87) International publication number: WO02033612

(57) **Abstract**

The present invention provides an electronic ticket issuing system that allows the easy and rapid transfer of a ticket without the need for user to go to vendor's place of business to receive said ticket or for vendor to mail said ticket to user.

The present invention is an electronic ticket issuing system that comprises a user terminal (110) capable of transmitting ticket reservation information, a vendor terminal (120) for receiving ticket reservation information from user and transmitting electronic ticket issuing information to user terminal, and a venue terminal (130) having a scanning means prepared at the entrance gate to read the electronic ticket issuing information stored in said vendor terminal, wherein said vendor terminal transmits said electronic ticket issuing information to said user terminal based on the ticket reservation information received from said user terminal, said electronic ticket issuing information is stored in said user terminal, and when said electronic ticket is to be used, said scanning device of said venue terminal reads said electronic ticket issuing information stored in said user terminal.

## Description

### FIELD OF THE INVENTION

The present invention relates to an electronic ticket issuing system, and more particularly, it relates to a system for issuing electronic tickets for entry to movies, concerts, sports events and the like, and for tickets for riding on airplanes, ships, trains, busses, and the like.

### BACKGROUND ART

At present, entry tickets for events and tickets to ride in vehicles and the like, are sold directly at event halls, stations, and the like, or reservation sales are made through telephone reservations and the like. In a typical system for reservation sales of entry tickets for events and the like, first the user places a telephone call to the reservation center, and places a reservation by informing the operator at the reservation center of the type of event, date, class of seating, and the like for the event that user desires to enter. At this time, the operator informs the user of their reservation number. The user goes to the nearest ticket exchange office, and presents their reservation number. The ticket exchange office confirms the reservation number and issues the ticket. The user receives the ticket and pays the ticket price.

In another reservation sales system, when the user calls the reservation system to make a reservation, the user is informed of a bank account number to which the ticket price is to be transferred, and the ticket is mailed to the user after receipt of transfer of funds from user is confirmed.

In the above ticket reservation sales systems, the user incurs the inconvenience of having to go to the ticket exchange center to receive their ticket. Also, in the ticket reservation system where the ticket is mailed to user, the user incurs the inconvenience of having to inform the operator of their address at the time they telephone to make their reservation. Also, when a reservation is made directly prior to the day an event is to be held, there is little time to go to the ticket exchange center to take receipt of the ticket. Also, when the ticket is mailed, it is possible that the ticket may not arrive before the event due to delays in the mail.

Also, in previous tickets printed on paper, there is work involved in printing the ticket, and paper resources are wasted through the printing of the ticket. Also, when storing a ticket printed on paper, there is a possibility of the ticket being stolen, and there is also a possibility of the paper ticket being forged and distributed.

Accordingly it is an object of the present invention to provide a system for issuing electronic tickets that does not require the user to go to take receipt of tickets nor for the ticket vendor to mail tickets, and that allows rapid receipt of a ticket.

### DISCLOSURE OF THE INVENTION

The present invention is an electronic ticket issuing system comprising a vendor terminal having a receiving unit for receiving ticket reservation information from a portable user terminal and a transmitting unit for transmitting electronic ticket issuing information to be read by a venue terminal with a scanning means to said user terminal based on the received ticket reservation information,
and wherein said vendor terminal transmits said electronic ticket issuing information to said user terminal based on the ticket reservation information received from said user terminal, said electronic ticket issuing information is stored in said user terminal, and when said electronic ticket is to be used, said scanning means of said venue terminal reads said electronic ticket issuing information stored in said user terminal.

In the electronic ticket issuing system according to the present invention, the user uses the user terminal to send ticket reservation information relating to the ticket user desires to purchase, such as the type of ticket, number of tickets, and the like, to a vendor having vendor terminal. The vendor receiving the ticket reservation information, transmits the ticket issuing information from the vendor terminal to the user terminal based on the ticket reservation information received. The ticket issuing information transmitted from the vendor terminal is stored in the memory of the user terminal When the ticket is to be used, the user carries the user terminal to the event venue, and the like. The venue entrance gate and the like is prepared with a venue terminal having a means of scanning to read the electronic ticket issuing information, and said means of scanning is used to read the electronic ticket issuing information from the user terminal carried by user. When it is verified that the appropriate electronic ticket issuing information is stored in user's user terminal, the attendant at the entrance gate allows the user entry.

The present invention is also an electronic ticket issuing system comprising a vendor terminal having a receiving unit for receiving ticket reservation information from a user terminal that can be attached to a portable electronic media and a transmitting unit for transmitting electronic ticket issuing information to be read by a venue terminal with a scanning means to said user terminal based on the received ticket reservation information,
and wherein said vendor terminal transmits said electronic ticket issuing information to said user terminal based on the ticket reservation information received from said user terminal, said electronic ticket issuing information is stored in said electronic media connected to said user terminal, and when said electronic ticket is to be used, said scanning means of said venue terminal reads said electronic ticket issuing information stored in said electronic media.

In the electronic ticket issuing system according to the present invention, the user terminal can be connected to electronic media, and the electronic ticket issuing information stored in user terminal can be transferred to said electronic media. Use of the electronic ticket issuing information stored in the electronic media is as already described herein.

The present invention is also an electronic ticket issuing system comprising a vendor terminal to record electronic ticket issuing information to be read by a venue terminal having a scanning means on portable electronic media,
and wherein when user reserves a ticket or after user reserves a ticket, said electronic media is attached to said vendor terminal, said vendor terminal records said electronic ticket issuing information in said electronic media, and when said electronic ticket is to be used, said scanning means of said venue terminal reads said electronic ticket issuing information stored in said electronic media.

In the electronic ticket issuing system according to the present invention, user goes directly to a ticket reservation station or the like prepared with a vendor terminal, and purchases electronic ticket issuing information stored in electronic media. Use of the electronic ticket issuing information stored in the electronic media is as already described herein.

The present invention is also an electronic ticket issuing system comprising a receiving unit to receive ticket reservation information and a user identifier from a user terminal, a storage unit for recording the received ticket reservation information and user identifier, and a transmission unit to transmit information to a venue terminal having an input means to input a user identifier,
and wherein, when a ticket reservation is made, said vendor terminal receives ticket reservation information and user identifier from said user terminal, said vendor terminal stores the received ticket reservation information and user identifier, and when said ticket is to be used, said input means of said venue terminal is used to input said user identifier, said user identifier input to said venue terminal is transmitted to said vendor terminal, said vendor terminal compares said transmitted user identifier with user identifier of the user who reserved said ticket, verifies that they are the same, and uses this information to allow entry.

In the electronic ticket issuing system according to the present invention, user uses the user terminal to send ticket reservation information to the vendor terminal, and at the same time also sends user identifier to vendor terminal. This ticket reservation information and user identifier is stored in vendor terminal. When the user uses the electronic ticket, user presents the user identifier transmitted at the time of reservation at the entrance gate prepared with venue terminal. The entrance code presented is input into venue terminal. The venue terminal communicates with vendor terminal to compare if the holder of user identifier has a ticket reservation. When ticket reservation is verified, the attendant at the entrance gate allows the user entry.

The present invention is also an electronic ticket issuing system comprising a storage unit for recording the input ticket reservation information and a user identifier, a receiving unit for receiving information from a venue terminal having an input means to input a user identifier, and a transmitting unit to transmit information to the venue terminal,
and wherein, when user reserves a ticket or after user reserves a ticket, the ticket reservation information and user identifier are input into said vendor terminal, said vendor terminal stores the input ticket reservation information and user identifier, and when user uses the ticket, said user identifier is input by said input means of said venue terminal, said venue terminal transmits said user identifier to said vendor terminal, compares said transmitted user identifier with user identifier of the user who reserved said ticket, verifies that they are the same, and uses this information to allow entry.

In the electronic ticket issuing system according to the present invention, user goes directly to a ticket reservation station or the like prepared with a vendor terminal, and inputs the ticket reservation information and user identifier. Use of the reserved ticket is as already described herein.

The present invention is also an electronic ticket issuing system comprising a vendor terminal to receive ticket reservation information from a portable user terminal for sending ticket reservation information and for sending electronic ticket issuing information to said user terminal,
wherein, said vendor terminal sends electronic ticket issuing information to said user terminal based on ticked reservation information received from said user terminal, said electronic ticket issuing information is stored in said user terminal, and when the ticket is to be used, information that an electronic ticket has been issued and/or information on seat reservations is displayed by said user terminal.

In the electronic ticket issuing system according to the present invention, the user uses the user terminal to send ticket reservation information to vendor having vendor terminal. The vendor receiving the ticket reservation information, transmits the electronic ticket issuing information from the vendor terminal to the user . The transmitted electronic ticket issuing information is stored in the storage unit of user terminal. When the ticket is used, user terminal displays the electronic ticket issuing information on the display unit of user terminal at the venue terminal entrance gate. The attendant at the entrance gate verifies the display and allows the user entry.

Also, the present invention may be configured such that the vendor terminal comprises an information input device and a central processing device, wherein ticket reservation information and user identifier input using the information input device are transmitted to and stored in the central processing device, and the venue terminal and central processing device communicate to verify the ticket reservation.

Said user terminal may comprise a personal computer, Internet device, normal telephone, mobile phone, wireless communications device, two-way television, electronic book, portable electronic device, or car navigation system or the like.

Said user identifier may comprise a user identifier card issued by vendor or code of electronic media, credit card number, debit card number, driver's license number, biological characteristic of user, passport number, or the like.

The present invention may also be configured such that the user terminal is a personal computer, Internet device, normal telephone, mobile phone, wireless communications device, two-way television, electronic book, portable electronic device, or car navigation system or the like; user identifier is recorded in said user terminal; and said user identifier recorded in said user terminal is read by said input means of said venue terminal.

The user identifier may be input by reading a user identifier card issued by vendor or code of electronic media, credit card number, debit card number, driver's license number, biological characteristic of user, passport number, or the like using said input means of said venue terminal.

The electronic ticket issuing information may be read by inserting said electronic media into said scanning means of said venue terminal, or the electronic ticket issuing information may be read by communicating through wireless means between said scanning means of said venue terminal and said electronic media.

The electronic ticket issuing information may be read by wireless communications between said scanning means of said venue terminal and said user terminal, or the electronic ticket issuing information may be read by directly connecting said user terminal with said scanning means of said venue terminal.

The present invention may also be configured such that said venue terminal has an insertion point to insert a user identifier card issued by vendor or code of electronic media, credit card number, debit card number, driver's license number, passport number, or the like, and a gate capable of opening and closing, wherein when the user inserting said item into said insertion point is allowed entrance, said gate opens, and when the person is denied entrance, said gate closes.

The present invention may also be configured such that said venue terminal has an insertion point to insert a user identifier card issued by vendor or code of electronic media, credit card number, debit card number, driver's license number, passport number, or the like, and a removal point to remove said item, wherein said insertion point is on one side of the entrance and said removal point is on the other side of the entrance. In this configuration, smooth flow of entrants can be secured.

The present invention may also be configured such that electronic ticket issuing information and/or information on seat reservations is displayed on user terminal storing electronic ticket issuing information.

The present invention may also be configured such that the electronic ticket issuing information can be transferred from user terminal and/or electronic media storing said electronic ticket issuing information to a different user terminal and/or electronic media.

The present invention may also be configured such that after user reserves a ticket and said ticket reservation information and said user identifier are recorded in said central processing device, said user may as necessary change said user identifier to user identifier of another person.

The present invention may also have user terminal and vendor terminal configured such that prior to user making a ticket reservation, commercials or event trailers including still pictures, video, and or audio information are sent from said vendor terminal to said user terminal.

The present invention may also have vendor terminal configured such that if user desires, input of ticket reservation information and/or user identifier into vendor terminal can be performed by operator operating vendor terminal.

The present invention may also have user terminal and vendor terminal configured such that ticket reservation information and/or user identifier are input into vendor terminal by means of voice recognition by user from user terminal.

The present invention may also be configured such that said venue terminal further has a printer to issue a physical ticket or print out of seat assignment to user.

The present invention may also be configured such that said user terminal, said vendor terminal, said venue terminal, and/or said central processing device further have a means of encoding, wherein ticket reservation information and/or electronic ticket issuing information are transmitted or stored in encoded form.

The present invention may also be configured such that information regarding payment for ticket is transmitted from user terminal to vendor terminal at the time ticket reservation information is transmitted.

### BRIEF DESCRIPTION OF THE DRAWINGS

Fig. 1 is a diagram illustrating the first preferred embodiment of an electronic ticket issuing system according to the present invention.
Fig. 2 is a diagram illustrating the second preferred embodiment of an electronic ticket issuing system according to the present invention.
Fig. 3 is a diagram illustrating the third preferred embodiment of an electronic ticket issuing system according to the present invention.
Fig. 4 is a diagram illustrating the fourth preferred embodiment of an electronic ticket issuing system according to the present invention.
Fig. 5 is a diagram illustrating the fifth preferred embodiment of an electronic ticket issuing system according to the present invention.
Fig. 6 is a diagram illustrating the sixth preferred embodiment of an electronic ticket issuing system according to the present invention.

### PREFERRED EMBODIMENT OF THE INVENTION

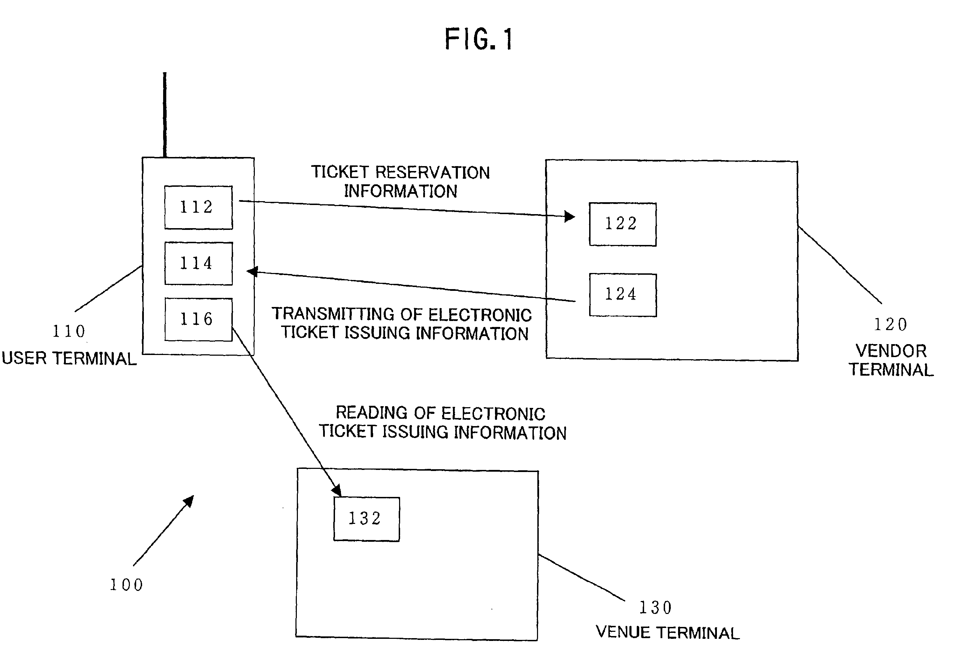

A first preferred embodiment of the present invention will be described in conjunction with Fig. 1. A preferred embodiment of an electronic ticket issuing system 100 as shown in Fig. 1 comprises a portable user terminal 110 having terminal transmitting unit 112, terminal receiving unit 114, and memory unit 116; vendor terminal 120 having receiving unit 122 and transmitting unit 124; and venue terminal 130 having scanning means 132 to read electronic ticket issuing information.

A user desiring to purchase a ticket transmits ticket reservation information from transmitting unit 112 of user terminal 110 to receiving unit 122 of vendor terminal 120. This transmission, for example, can be performed by user terminal 110 having a mobile telephone capability, and telling operator operating vendor terminal 120 of the desired ticket reservation. The operator upon receiving user's request, transmits the electronic ticket issuing information to the receiving unit 114 of user terminal 110 from the transmitting unit 124 of vendor terminal 120. Receiving unit 114 of user terminal 110 receives the electronic ticket issuing information from the transmitting unit 124 of vendor terminal 120, and said the electronic ticket issuing information is stored in memory unit 116 of user terminal 110.

When user uses the issued electronic ticket issuing information, user for example takes user terminal 110 to the event venue for the event for which the ticket was reserved. The entrance gate of the event venue is prepared with venue terminal 130, and scanning means 132 of venue terminal 130 reads the electronic ticket issuing information stored in memory means 116 of user terminal 110. When the electronic ticket issuing information is verified by being read by scanning means 132, the attendant at the gate allows the user entry.

The functions of said user terminal 110 can be embedded not only in a mobile phone, but in a personal computer, Internet device, wireless communications device, electronic book, portable electronic device, portable navigation system, or the like. Also, transmission of ticket reservation information from user terminal 110 to vendor terminal 120 can be performed not only through operation of the operator, but by means of voice recognition, dial buttons of mobile phone, or like means of information transmission.

Reading of electronic ticket issuing information at the entrance gate can be performed by attaching a cable or the like between scanning means 132 of venue terminal 130 and user terminal 110, directly inserting user terminal 110 into scanning means 132, or through wireless means of communication. Also, the entrance gate can be configured to automatically open and close, with the gate opening when electronic ticket issuing information is verified and closing when it is not. Further, a printer may be connected to venue terminal 130 to printer to issue a physical ticket or print out of seat assignment to user based on the scanned electronic ticket issuing information. Also, when the event venue has assigned seating, such reserved seating information may be included in the electronic ticket issuing information, and said reserved seating information may be displayed on display unit of user terminal 110 (not shown) to allow verification of entrant's seat.

Also, in this specification, "venue" refers not only to concert halls and the like, but also means such vehicles as airplanes, trains, ships, and the like to which only boarding passes or ticket holders may enter, and "entrance" refers to entering said "venue."

A second preferred embodiment of the present invention will be described. For this and all subsequent embodiments, only those portions that differ from the embodiment already described will be explained, and those portions that are the same will be omitted. Also, for elements that are common between the diagrams, the hundred column number will be changed with the remaining number kept the same for convenience.

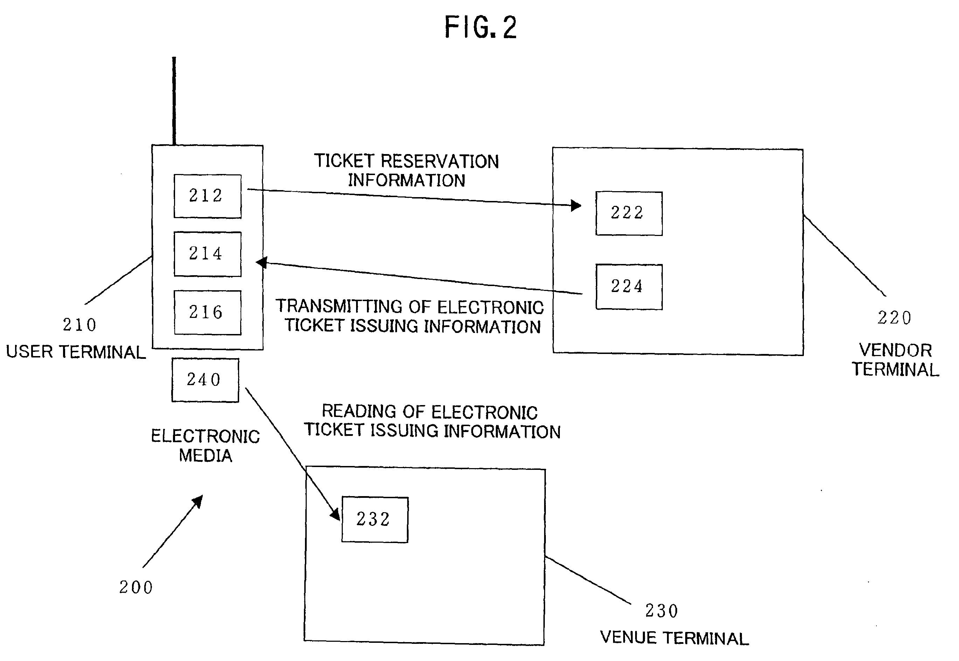

A second preferred embodiment of the present invention will be described in conjunction with Fig. 2. A preferred embodiment of an electronic ticket issuing system 200 as shown in Fig. 2 comprises an electronic media 240 capable of storing electronic information, user terminal 210 capable of being connected to said electronic media, vendor terminal 220, and venue terminal 230. User uses user terminal 210 to receive electronic ticket issuing information from vendor terminal 220, and said electronic ticket issuing information is stored in memory unit 216. User copies the electronic ticket issuing information stored in memory unit 216 to the electronic media 240 by connecting the electronic media 240 to user terminal 210. When the electronic ticket issuing information is copied to electronic media 240, the electronic ticket issuing information recorded in memory unit 216 is deleted.

When user uses the issued electronic ticket, user carries electronic media 240 that has recorded the electronic ticket issuing information to the venue. At the entrance gate of venue, the electronic ticket issuing information stored in electronic media 240 is read by scanning means 232 of venue terminal 230 to allow entrance.

In the present embodiment, the function of user terminal can be embedded in regular telephones, desk top personal computers, and the like, that are not capable of being carried.

Electronic media 240 can be any of card issued by vendor using electronic ticket issuing system, portable electronic device, mobile telephone, personal computer, Internet device, wireless communications device, electronic book, portable navigation system, or the like.

The present embodiment may be configured such that one side of entrance gate at venue has an insertion point to insert electronic media 240 and a removal point to remove electronic media 240 that was inserted located on the other side of the entrance. In this configuration, smooth flow of entrants can be secured, wherein scanning means 232 reads the electronic ticket issuing information stored in electronic media 240 that was inserted into said insertion point. In this configuration, smooth flow of entrants can be secured.

Also, the present embodiment may be configured such that the electronic ticket issuing information stored in user terminal 210 or electronic media 240 can be transferred to a different user terminal or electronic media.

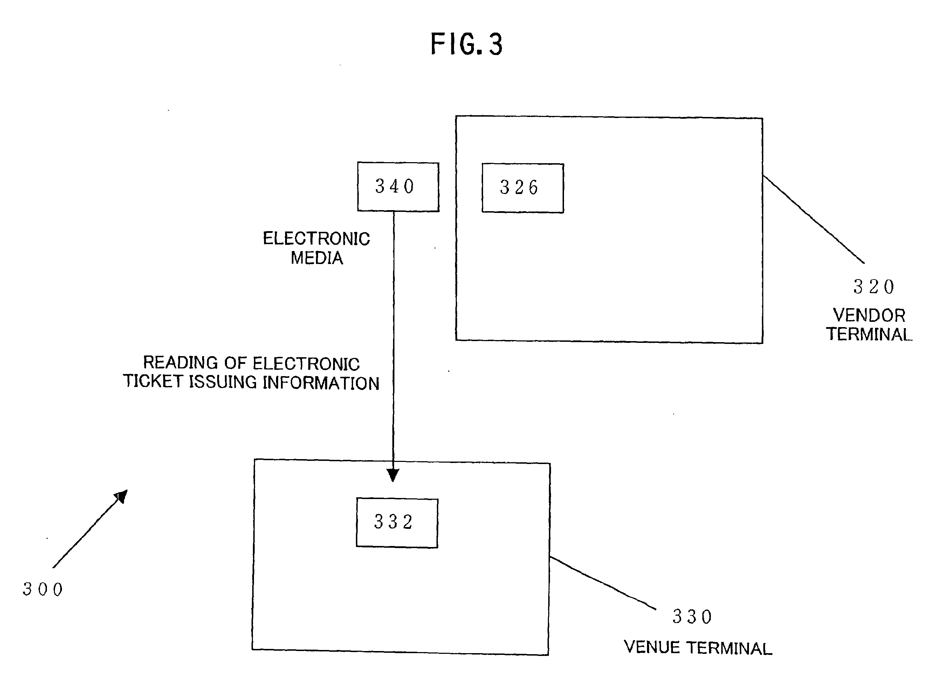

A third preferred embodiment of the present invention will be described in conjunction with Fig. 3. Fig. 3 shows a third embodiment of an electronic ticket issuing system 300. Electronic ticket issuing system 300 according to the present embodiment comprises electronic media 340, vendor terminal 320 capable of writing electronic ticket issuing information, and venue terminal 330.

In this embodiment, when user reserves a ticket, user goes to a ticket reservation station prepared with vendor terminal 320. At the ticket reservation station, the writing unit 326 of vendor terminal 320 is used to write the electronic ticket issuing information to electronic media 340.

When the electronic ticket is used, the electronic ticket issuing information stored in electronic media 340 is read by scanning means 332 of venue terminal 330, to allow entrance to venue.

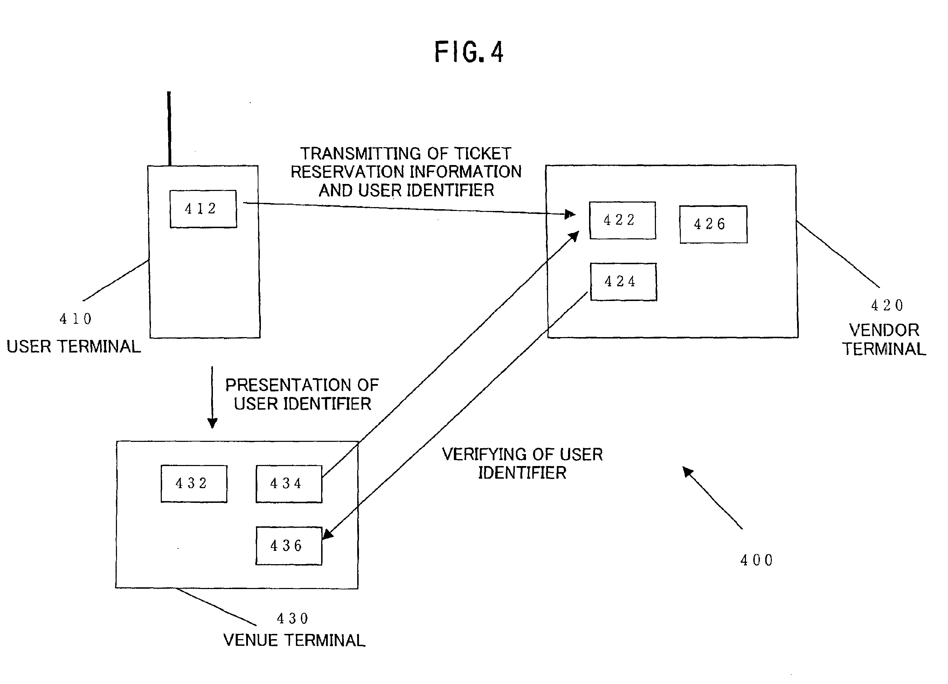

A fourth preferred embodiment of the present invention will be described in conjunction with Fig. 4. Fig. 4 shows a fourth embodiment of an electronic ticket issuing system 400. Electronic ticket issuing system 400 according to the present embodiment comprises user terminal 410, vendor terminal 420 capable of receiving ticket reservation information and user identifier, and venue terminal 430 capable of two-way communication with vendor terminal 420.

When user reserves a ticket, ticket reservation information and user identifier are transmitted from transmitting unit 412 of user terminal 410 to receiving unit 422 of vendor terminal 420. Said ticket reservation information and user identifier are stored in memory unit 426 of vendor terminal 420.When entering the event venue, or the like, the user inputs the user identifier transmitted to vendor terminal at the entrance gate. The transmitting unit 434 of venue terminal transmits said user identifier to receiving unit 422 of vendor terminal 420. Vendor terminal 420 compares the received user identifier with the user identifier stored in memory unit 426 , and verifies if the ticket has been reserved or not. When it is verified that the ticket reservation has been made, transmitting unit 424 of vendor terminal 420 transmits the confirmation to receiving unit 436 of venue terminal 430. When the gate attendant confirms that the reservation has been made, the attendant allows user entrance.

User identifier may comprise a user identifier card issued by vendor or code of electronic media, credit card number, debit card number, driver's license number, passport number, or the like. Also, user terminal 410 may be prepared with a scanner (not shown) to read user's fingerprint, iris, or other biological characteristic, and the biological characteristic scanned may be used as user identifier. In this case, a scanner to read user's biological characteristic is also prepared in venue terminal 430 (not shown).

The present embodiment may also be configured such that venue terminal 430 is prepared with scanning means 432 to read user identifier, wherein scanning means 432 reads said credit card number or the like and automatically communicates with vendor terminal 420 to check the ticket reservation information. Also, the present embodiment may be configured such that user identifier is recorded in advance in user terminal 410, and said user identifier is read by scanning means 432. In this specification, reading of user identifier by said scanning means 432 and direct input by attendant into venue terminal 430 of user identifier presented by user are collectively referred to as "input of user identifier."

Also, the present embodiment may be configured such that the user identifier recorded in memory unit 426 of vendor terminal 420 can changed to a different user identifier after reservation processing is completed. Using this configuration, a ticket wholesaler, for example, can reserve a large number of tickets, and later when the final user purchases said ticket, change the wholesaler's user identifier recorded in memory unit 426 to the final user's user identifier, thus allowing transfer of the electronic ticket.

Further, vendor terminal 420 can be configured to comprise an information input device (not shown) and a central processing device (not shown). In this configuration, input device (not shown) of vendor terminal 420 transmits the ticket reservation information and user identifier received from user terminal 410 to central processing device (not shown), and said information is stored in central processing device (not shown). When the ticket is used, venue terminal 430 checks user identifier presented by user with the identifier stored in central processing device (not shown) to verify if ticket is reserved. When ticket reservation is verified, the venue attendant allows entry. The present embodiment may also be configured to allow multiple information input devices to be connected to a single central processing device (not shown).

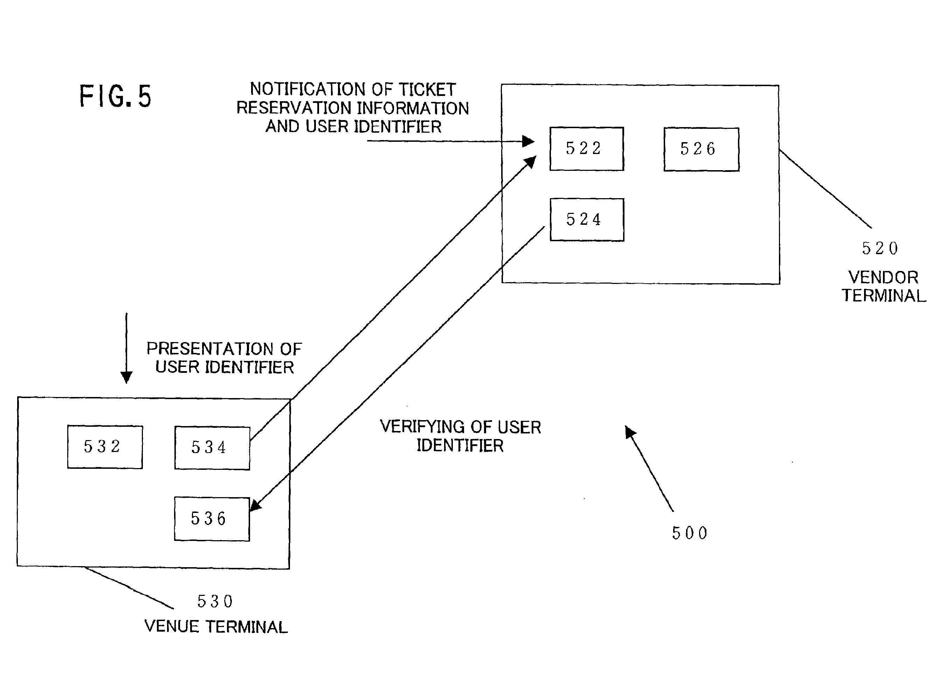

A fifth preferred embodiment of the present invention will be described in conjunction with Fig. 5. Fig. 5 shows a fourth embodiment of an electronic ticket issuing system 500. Electronic ticket issuing system 500 according to the present embodiment comprises vendor terminal 520 and venue terminal 530. In the present embodiment, when user reserves a ticket, user goes directly to a ticket reservation station prepared with venue terminal 520, and notifies the ticket reservation information and user identifier. Other than this, the present embodiment is the same as the fourth preferred embodiment of the present invention.

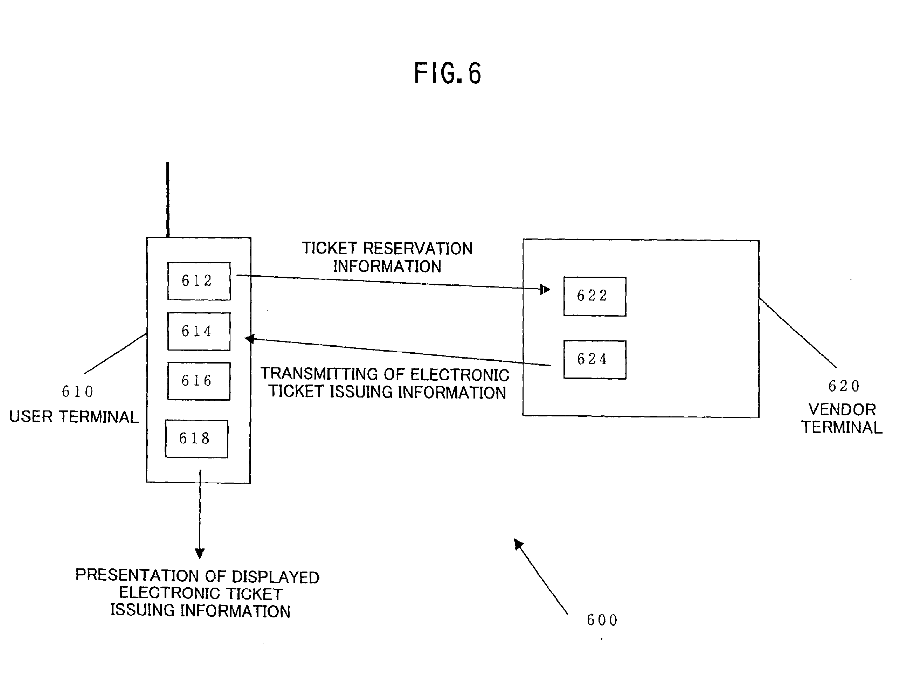

A sixth preferred embodiment of the present invention will be described in conjunction with Fig. 6. Fig. 6 shows a sixth embodiment of an electronic ticket issuing system 600. Electronic ticket issuing system 600 according to this embodiment comprises user terminal 610 and vendor terminal 620. In the present embodiment, user transmits electronic ticket reservation information from user terminal 610 to vendor terminal 620, and vendor terminal 620 transmits electronic ticket issuing information to user terminal 610. User terminal 610 which receives the electronic ticket issuing information, records the electronic ticket issuing information in memory unit 616. When the electronic ticket is used, the electronic ticket issuing information is displayed on display unit 618 of user terminal 610, and is presented to the attendant at venue entry gate. The attendant upon confirming the electronic ticket issuing information allows user entry.

All of the embodiments shown herein can be used for any type of ticket issued to user whether free or otherwise. When electronic ticket is one that is paid for, the electronic ticket issuing system according to the present invention may be used in combination with any available payment system, including cash, credit cards, debit cards, and the like.

Also, as an additional function, an electronic ticket issuing system according to the present invention may be configured such that prior to user making a ticket reservation, commercials or event trailers including still pictures, video, and or audio information are sent from vendor terminal to user terminal, allowing user to view this information on user terminal. Also, an electronic ticket issuing system according to the present invention may be configured such that user terminal, vendor terminal, venue terminal, and/or central processing device further have a means of encoding, wherein ticket reservation information and/or electronic ticket issuing information are transmitted or stored in encoded form.

The discussion in this specification shows the preferred embodiment of the present invention, but many variations are possible within the spirit of the claims of the present invention to one familiar with the art.

### APPLICABILITY IN INDUSTRY

The present invention allows the easy and rapid transfer of a ticket without the need for user to go to vendor's place of business to receive said ticket or for vendor to mail said ticket to user.

## Claims

1. An electronic ticket issuing system comprising a vendor terminal having a receiving unit for receiving ticket reservation information from a portable user terminal and a transmitting unit for transmitting electronic ticket issuing information to be read by a venue terminal with a scanning means to said user terminal based on the received ticket reservation information,
and wherein said vendor terminal transmits said electronic ticket issuing information to said user terminal based on the ticket reservation information received from said user terminal, said electronic ticket issuing information is stored in said user terminal, and when said electronic ticket is to be used, said scanning means of said venue terminal reads said electronic ticket issuing information stored in said user terminal.

2. An electronic ticket issuing system comprising a vendor terminal having a receiving unit for receiving ticket reservation information from a user terminal that can be attached to a portable electronic media and a transmitting unit for transmitting electronic ticket issuing information to be read by a venue terminal with a scanning means to said user terminal based on the received ticket reservation information,
and wherein said vendor terminal transmits said electronic ticket issuing information to said user terminal based on the ticket reservation information received from said user terminal, said electronic ticket issuing information is stored in said electronic media connected to said user terminal, and when said electronic ticket is to be used, said scanning means of said venue terminal reads said electronic ticket issuing information stored in said electronic media.

3. An electronic ticket issuing system comprising a vendor terminal to record electronic ticket issuing information to be read by a venue terminal having a scanning means on portable electronic media,
and wherein when user reserves a ticket or after user reserves a ticket, said electronic media is attached to said vendor terminal, said vendor terminal records said electronic ticket issuing information in said electronic media, and when said electronic ticket is to be used, said scanning means of said venue terminal reads said electronic ticket issuing information stored in said electronic media.

4. An electronic ticket issuing system comprising a vendor terminal having a receiving unit to receive ticket reservation information and a user identifier from a user terminal, a storage unit for recording the received ticket reservation information and user identifier, and a transmission unit to transmit information to a venue terminal having an input means to input a user identifier,
and wherein, when a ticket reservation is made, said vendor terminal receives ticket reservation information and user identifier from said user terminal, said vendor terminal stores the received ticket reservation information and user identifier, and when said ticket is to be used, said input means of said venue terminal is used to input said user identifier, said user identifier input to said venue terminal is transmitted to said vendor terminal, said vendor terminal compares said transmitted user identifier with user identifier of the user who reserved said ticket, verifies that they are the same, and uses this information to allow entry.

5. An electronic ticket issuing system comprising a vendor terminal having a storage unit for recording the input ticket reservation information and a user identifier, a receiving unit for receiving information from a venue terminal having an input means to input a user identifier, and a transmitting unit to transmit information to the venue terminal,
and wherein, when user reserves a ticket or after user reserves a ticket, the ticket reservation information and user identifier are input into said vendor terminal, said vendor terminal stores the input ticket reservation information and user identifier, and when user uses the ticket, said user identifier is input by said input means of said venue terminal, said venue terminal transmits said user identifier to said vendor terminal, compares said transmitted user identifier with user identifier of the user who reserved said ticket, verifies that they are the same, and uses this information to allow entry.

6. An electronic ticket issuing system comprising a vendor terminal having a receiving unit for receiving ticket reservation information from a portable user terminal for transmitting ticket reservation information and a transmitting unit for transmitting electronic ticket issuing information to said user terminal,
said system **characterized in that** said vendor terminal transmits said electronic ticket issuing information to said user terminal based on said ticket reservation information received from said user terminal, said electronic ticket issuing information is stored in said user terminal, and when said electronic ticket is to be used, information that said electronic ticket has been issued and/or information on seat reservations is displayed on said user terminal.

7. An electronic ticket issuing system according to either of claim 4 or claim 5, wherein said vendor terminal comprises an information input device and a central processing device, said information input device receives ticket reservation information and user identifier from said user terminal or ticket reservation information and user identifier are input directly into said information input device, the received or input ticket reservation information and user identifier are transmitted to said central processing device, and said central processing device that receives ticket reservation information and user identifier stores this information, and further wherein when said ticket is to be used, said user identifier is input into said scanning means of said venue terminal, said venue terminal transmits said user identifier to said central processing unit, said central processing unit compares said transmitted user identifier with said stored user identifier to confirm if this user identifier has a reserved ticket, and result of said comparison is used to admit user to venue.

8. An electronic ticket issuing system according to any one of claim 1, claim to, claim 4, or claim 6, wherein said user terminal comprises any of a personal computer, Internet device, normal telephone, mobile phone, wireless communications device, two-way television, electronic book, portable electronic device, or car navigation system.

9. An electronic ticket issuing system according to any one of claim 2 or claim 3, wherein said electronic media is a card that stores electronic information.

10. An electronic ticket issuing system according to any one of claim 4 or claim 5, wherein said user identifier is any of a user identifier card issued by vendor, code of electronic media, credit card number, debit card number, driver's license number, biological characteristic of user, passport number.

11. An electronic ticket issuing system according to claim 4, wherein said user terminal comprises any of a personal computer, Internet device, normal telephone, mobile phone, wireless communications device, two-way television, electronic book, portable electronic device, or car navigation system, and wherein said user terminal stores user identifier and said input means of said venue terminal is used to read said user identifier stored in said user terminal.

12. An electronic ticket issuing system according to any one of claim 4 or claim 5 wherein said user identifier is input by said input means of said venue terminal reading a user identifier card issued by vendor, code of electronic media, credit card number, debit card number, driver's license number, or passport number.

13. An electronic ticket issuing system according to any one of claim 2, claim 3, or claim 9, wherein electronic ticket issuing information is read by inserting said electronic media into said scanning means of said venue terminal.

14. An electronic ticket issuing system according to any one of claim 2, claim 3, or claim 9, wherein electronic ticket issuing information is read by said scanning means of said venue terminal communicating with said electronic media through wireless communications.

15. An electronic ticket issuing system according to any one of claim 2, claim 3, or claim 9, wherein electronic ticket issuing information is read by said scanning means of said venue terminal communicating with said user terminal through wireless communications.

16. An electronic ticket issuing system according to any one of claim 2, claim 3, or claim 9, wherein electronic ticket issuing information is read by said scanning means of said venue terminal communicating with said user terminal through a direct connection.

17. An electronic ticket issuing system according to any one of claim 2 to claim 5, wherein said venue terminal has an insertion point to insert a user identifier card issued by vendor or electronic media, credit card, debit card, driver's license, passport, or the like, having recorded therein electronic ticket issuing information and/or user identifier, and a gate capable of opening and closing, wherein when the user inserting said item into said insertion point is allowed entrance, said gate opens, and when the person is denied entrance, said gate closes.

18. An electronic ticket issuing system according to any one of claim 2 to claim 5, wherein said venue terminal has an insertion point to insert a user identifier card issued by vendor or code of electronic media, credit card number, debit card number, driver's license number, passport number, or the like, and a removal point to remove said item, wherein said insertion point is on one side of the entrance and said removal point is on the other side of the entrance.

19. An electronic ticket issuing system according to any one of claim 1, claim 2, claim 4, claim 6, claim 8, claim 11, claim 12, claim 15, or claim 16, wherein electronic ticket issuing information and/or information on seat reservations is displayed on user terminal storing electronic ticket issuing information.

20. An electronic ticket issuing system according to any one of claim 1 to claim 3, claim 6, claim 8, or claim 13 to claim 19, wherein said electronic ticket issuing information can be transferred from user terminal and/or electronic media storing said electronic ticket issuing information to a different user terminal and/or electronic media.

21. An electronic ticket issuing system according to any one of claim 4, claim 5, claim 10 to claim 12 or claim 15 to claim 20, wherein after user reserves a ticket and said ticket reservation information and said user identifier are recorded in said central processing device, said user may as necessary change said user identifier to user identifier of another person.

22. An electronic ticket issuing system according to any one of claim 1 to claim 21, wherein prior to user making a ticket reservation, commercials or event trailers including still pictures, video, and or audio information are sent from said vendor terminal to said user terminal.

23. An electronic ticket issuing system according to any one of claim 1 to claim 22, wherein if user desires, input of ticket reservation information and/or user identifier into vendor terminal can be performed by operator operating vendor terminal.

24. An electronic ticket issuing system according to any one of claim 1 to claim 22, wherein said user terminal and said vendor terminal are configured such that ticket reservation information and/or user identifier are input into vendor terminal by means of voice recognition of user's voice via user terminal.

25. An electronic ticket issuing system according to any one of claim 1 to claim 24, wherein said venue terminal further has a printer to issue a physical ticket or print out of seat assignment to user.

26. An electronic ticket issuing system according to any one of claim 1 to claim 25 above, wherein said user terminal, said vendor terminal, said venue terminal, and/or said central processing device further have a means of encoding, wherein ticket reservation information and/or electronic ticket issuing information are transmitted or stored in encoded form.

27. An electronic ticket issuing system according to any one of claim 1 to claim 26 above, wherein information regarding payment for ticket is transmitted from user terminal to vendor terminal at the time ticket reservation information is transmitted.
